Europäisches Patentamt

European Patent Office

Office européen des brevets

(19)

(11) Veröffentlichungsnummer: **0 077 747**
**B1**

(12) # EUROPÄISCHE PATENTSCHRIFT

(45) Veröffentlichungstag der Patentschrift:
**07.01.87**

(51) Int. Cl.⁴: **B 22 D 11/16,** G 01 F 23/26

(21) Anmeldenummer: **82630064.2**

(22) Anmeldetag: **29.06.82**

(54) Verfahren zum Überwachen einer Stranggiesskokille im Betrieb.

(30) Priorität: **16.10.81 LU 83699**

(43) Veröffentlichungstag der Anmeldung:
**27.04.83 Patentblatt 83/17**

(45) Bekanntmachung des Hinweises auf die Patenterteilung:
**07.01.87 Patentblatt 87/2**

(84) Benannte Vertragsstaaten:
**BE DE FR GB IT**

(56) Entgegenhaltungen:
**EP - A - 0 010 539**
**FR - A - 2 076 147**
**GB - A - 834 783**
**LU - A - 74 656**
**US - A - 3 519 060**

(73) Patentinhaber: **ARBED S.A., Avenue de la Liberté 19,
L-2930 Luxembourg (LU)**

(72) Erfinder: **Block, Franz-Rudolf, Dr., Kalfstrasse 58,
D-5106 Roetgen (DE)**

(74) Vertreter: **Neyen, René, Administration Centrale de
l'Arbed Case postale 1802, L-2930 Luxembourg (LU)**

# Beschreibung

Die vorliegende Erfindung betrifft ein Verfahren zum Überwachen einer Stranggiesskokille im Betrieb, gemäss dem Oberbegriff des Anspruchs 1.

Die Kenntnis des Füllstandes innerhalb der Kokille ermöglicht es, eine entsprechende Nachfüllung bzw. eine entsprechende Strang-Ausziehgeschwindigkeit einzustellen.

Zur Füllstandmessung müssen zuverlässige und schnelle Messmethoden eingesetzt werden. Die entsprechenden Messvorrichtungen müssen auch dann einsetzbar sein, wenn in einem abgeschlossenen System unter Pulver oder unter Schutzgas gearbeitet wird; sie sollen ferner so eingebaut werden können, dass sie nicht stören, – insbesondere darf der Zugang zur Kokille nicht behindert werden – und dass sie zugleich selbst geschützt sind. Solche Messeinrichtungen sollen überdies keine Gefahrenquellen darstellen.

Verfahren, bei denen aus der Temperatur der Kokillenwand auf die Anwesenheit von flüssigem Metall geschlossen wird, sind reaktionsträge und aufwendig.

Optische Verfahren können nur bedingt eingesetzt werden, wenn unter Pulver oder in abgeschlossenen Systemen vergossen wird.

Messmethoden in denen radioaktive Substanzen verwendet werden, stossen auf zunehmend strengere Genehmigungsverfahren.

Generell ist bekannt, dass durch Änderungen der einen Leiter durchsetzenden magnetischen Felder im Leiter Ströme induziert werden, und dass aus den Sekundärfeldern dieser Ströme auf die Anwesenheit des Leiters geschlossen werden kann. Eine hierauf beruhende Messmethode ist in der DE-A-2 101 729 beschrieben. Bekannt ist auch, dass sich die Impedanz einer Spule ändert, wenn man einen Leiter in das Feld der Spule bringt.

So bestimmt gemäss der FR-A-2 251 811 ein kontaktloses Induktionsmessgerät die Lage der Grenze zwischen zwei Phasen, die unterschiedliche Dichten sowie Resistivität aufweisen, wobei zumindest eine der Phasen den Strom leitet ohne magnetisch zu sein. Das Messgerät begreift Arbeits- sowie Messspulen, die in offener Anordnung auf die besagte Grenze gerichtet sind.

Doch versagen solche Messmethoden beim Stranggiessen von Stahl, da die gut leitende Kupferkokille die Felder so stark abschirmt, dass die Empfindlichkeit der Messeinrichtung nicht befriedigen kann. Überdies behindern Einrichtungen, die über der Kokille oder am oberen Kokillenrand angeordnet sind, die Zugänglichkeit und können durch überlaufenden Stahl zerstört werden.

Die Anmelderin hat in ihrer EP-A-10 539, die den Oberbegriff des Anspruchs 1 bildet, ein Verfahren beschrieben gemäss welchem der Einfluss der Kokille ausgeschaltet werden soll, indem eine felderzeugende Primärspule und zwei gegeneinander geschaltete gleichartige Sekundärspulen sowie das flüssige Metall eine Anordnung bilden, in der die Lage des Metallpegels zu den Spulen eine induzierte Spannung hervorrufen kann. Das Verfahren sieht vor, dass man die Primärspule sowie die Sekundärspulen berührungslos koaxial um das Gefäss legt, dass man die aufgrund der Lage des Metallspiegels in den Sekundärspulen induzierte Spannung sowie die elektrische Leitfähigkeit des Metalls misst und dass man aus dem unter Berücksichtigung des gemessenen Leitfähigkeitswertes korrigierten Spannungswert die Lage des Metallspiegels bestimmt.

Bei dieser Messmethode hat sich aber herausgestellt, dass sie bei grossen Wandstärken der Kokillen oder bei einer dicken heissen Abdeckung des Stahlbades durch Giesspulver oder Schlacke nicht den Stahl- sondern den Schlackenspiegel bzw. einen gewichteten Wert von beiden ergibt, da die Leitfähigkeit der Kupferkokille sich mit der Temperatur ändert und die Temperatur durch anliegende heisse Schlacken oder Pulver verändert wird.

Bei dicken Kokillen kann es dazu kommen, dass die Messsignale stärker durch die temperaturbedingten Leitfähigkeitsänderungen in der Kokillenwand als durch die Anwesenheit des flüssigen Metalls bestimmt werden.

Die Aufgabe der Erfindung besteht darin, eine Messmethode zur Bestimmung des Füllstandes, der Schlackenschichtdicke, sowie der thermischen Gegebenheiten innerhalb der Kokillenwand in Stranggiesskokillen zu schaffen, wobei die Erfindung den oben angegebenen Anforderungen genügen und die den bekannten Verfahren innewohnenden Nachteile vermeiden soll.

Diese Aufgabe wird durch das in Anspruch 1 gekennzeichnete Verfahren gelöst. Vorteilhafte Ausgestaltungen der Erfindung sind in den Unteransprüchen angegeben.

In der Tat dringen die magnetischen Induktionen der einzelnen Frequenzen umso weniger tief in die Leiter ein, je höher die Frequenz ist. Niedrigfrequente Feldkomponenten dringen also stärker durch die Kupferkokille als hochfrequente und induzieren im flüssigen Metall, gemessen an den in der Kokille induzierten Strömen, stärkere Ströme. Daher enthalten die induzierten Sekundärspannungen in einer Messspule, welche die Kokille in geeigneter Höhe umgibt, in diesem Fall sowohl Informationen über die Temperatur in der Kokillenwand als auch die gewünschte Information über den Badspiegelstand. Um diese Informationen zu erhalten, bedient man sich erfindungsgemäss einer doppelten Vergleichsmessung und zwar verwendet man eine Referenzmessspule, die so tief um die Kokille sitzt, dass im normalen Betrieb sich immer in ihrem Inneren das heisse Metall befindet. Eine oder mehrere weitere Messspulen werden vorzugsweise in dem Bereich der möglichen Badspiegelschwankungen angebracht.

Von der in einer Messspule induzierten Spannung wird die Referenzspannung subtrahiert. Ist die Differenzspannung gleich Null, so liegen in beiden Spulen die gleichen Bedingungen vor. Ist sie ungleich Null, so ist aus ihrem Verlauf, d.h. dem Vergleich der Amplituden und/oder Phasen der Fourierkomponenten des Signals auf die Anwesenheit des leitenden Bades und auf die Temperatur in der Kokillenwand zu schliessen.

Da die Temperatur in der Kokillenwand durch die anliegenden heissen Medien, Stahl und Schlacke geprägt wird lässt sich auf diese Weise zusätzlich die Schlackendicke messen.

Eine Eichung des Messsystems kann man vornehmen, indem man eine parallele Badspiegelmessung – z.B. mit Hilfe einer optischen Methode – durchführt, oder indem man die bei vorgegebenem Primärfeld und vorgegebenen Bedingungen induzierten Spannungen berechnet.

Nachstehend wird ein einfaches Ausführungsbeispiel für das Messverfahren beschrieben.

Der Einfachheithalber enthalte der Strom in der Primärspule nur zwei harmonische Schwingungen mit den beiden Frequenzen $\omega 1$ und $\omega 2$.

Dabei sei $\omega 2$ grösser als $\omega 1$.

Die Phasenverschiebung sei so gewählt, dass sich in der Referenzspule die Phasenverschiebung der beiden induzierten Schwingungen zu Null ergibt.

In der Referenzspule wird also die Spannung $UR = U1 \cos \omega 1 t + U2 \cos \omega 2 t$ gemessen.

In einer Messspule wird man hingegen die Spannung $UM = (U1 + \Delta U1) \cos (\omega 1 t + \varphi 1) + (U2 + \Delta U2) \cos (\omega 2 t + \varphi 2)$ messen. Das Signal enthält also bei nur zwei Frequenzen bereits vier Informationen; die veränderten Amplituden und die Phasenverschiebungen $\varphi i$.

Damit die Informationen sich besser auflösen lassen, wird die Differenz $(UM–UR)$ betrachtet;

$$UM - UR = (U1 + \Delta U1)$$
$$[\cos\omega 1 t . \cos \varphi 1 - \sin\omega 1 t . \sin\varphi 1]$$
$$+ (U2 + \Delta U2)$$
$$[\cos\omega 2 t . \cos\varphi 2 - \sin\omega 2 t . \sin\varphi 2]$$
$$- U1 \cos\omega 1 t - U2 \cos\omega 2 t$$

Für kleine Phasenverschiebungen gilt näherungsweise $\cos\varphi i = 1$ und $\sin\varphi i = \varphi i$.

Werden Glieder zweiter Ordnung in den Gleichungen vernachlässigt, so vereinfacht sich die vorstehende Gleichung zu:

$UM = UR = \Delta U1 . \cos\omega 1 t - U1 . \sin\omega 1 t . \sin\varphi 1 + \Delta U2 . \cos\omega 2 t - U2 . \sin\omega 2 t . \sin\varphi 2$

Man kann alle vier Terme in bekannter Weise einzeln messen.

Ist die höhere Frequenz hoch genug, so gibt $\Delta U2$ im wesentlichen eine Information über die durch die Temperatur verursachten Leitfähigkeitsänderungen in der Kupferwand.

Je höher die Temperatur ist, umso kleiner ist die Leitfähigkeit der Kupferkokille. Je grösser der Temperaturunterschied der Kokillenbereiche in der Mess- und Referenzspule ist, umso grösser ist auch der Betrag von $\Delta U2$.

Die Sekundärspannung der Schwingung mit der niedrigeren Frequenz wird – voraussetzungsgemäss – im wesentlichen auch durch die Kokillentemperatur bestimmt; denn wäre dies nicht der Fall, d.h. würde der Einfluss des flüssigen Metalls selbst überwiegen so könnte man die Spannung der niedrigen Frequenz selbst als Information verwenden und brauchte weder eine zweite Spannung mit höherer Frequenz noch einen Vergleich mit dieser. So aber bleibt nur das Wissen, dass bei der niedrigeren Frequenz der Einfluss des Bades stärker ist.

Für die kleinen zusätzlichen Spannungen kann näherungsweise angenommen werden, dass sie sich additiv aus den Beiträgen des Metalls und der Wand zusammensetzen:

Es gilt daher:

$\Delta Ui = \Delta UiB(H) + \Delta UiK(T); i = 1,2.$

Hierbei sind H die Höhe des Metallspiegels und T ein gewichteter Mittelwert der Temperatur der Kokille im Messbereich und damit ein Mass für die Höhe L des Schlackenspiegels. Der Index B weist auf das Bad hin, der Index K auf die Kokille.

Die Funktion $\Delta UiB(H)$ ist als bekannt anzusehen. Man kann z.B. mit Hilfe von kaltem Material mit gleicher Leitfähigkeit, z.B. einem geeigneten austenitischen Stahl, die Kennlinien $\Delta UiB = \Delta UiB(H)$ aufnehmen.

Der Beitrag $\Delta UiK$ hängt von dem Temperaturverlauf über die Höhe der Kokille ab. Um diesen zu erfassen, muss man mehrere übereinander liegende Sekundärspulen verwenden.

Wenn wie üblich T(L) bekannt ist, so ist auch $\Delta UiK(L)$ bekannt.

Aus zwei Messwerten $\Delta Ui$ und den obigen Gleichungen kann man dann auf H und L schliessen.

Wird die Messeinrichtung nur zum Regeln des Badspiegels benutzt – was der übliche Einsatz sein wird – so kann man sich auf kleine Abweichungen $\Delta H = h$ und $\Delta L = l$ beschränken.

Dann gilt:

$\Delta U1 = \alpha 1 \cdot h + \beta 1 \cdot 1$ und
$\Delta U2 = \alpha 2 \cdot h + \beta 2 \cdot 1$, woraus

$$h = \frac{\beta 2 \cdot \Delta U1 - \beta 1 \cdot \Delta U2}{\alpha 1 \cdot \beta 2 - \alpha 2 \cdot \beta 1} = k1 \cdot \Delta U1 - k2 \cdot \Delta U2$$

und

$$1 = \frac{\alpha 1 \cdot \Delta U2 - \alpha 2 \cdot \Delta U1}{\alpha 1 \cdot \beta 2 - \alpha 2 \cdot \beta 1} = k3 \cdot \Delta U2 - k4 \cdot \Delta U1$$

folgt.

Die vorgenannten einfachen Rechenoperationen lassen sich mit bekannten elektronischen Bausteinen analog oder auch digital durchführen.

Die Konstanten $ki$ lassen sich auch in einfachen Betriebsversuchen ermitteln.

Durch die Verwendung von mehreren Sekundärspulen übereinander, lässt sich der Temperaturverlauf in der Wand stetig überwachen und nicht nur auf die Höhe des Badspiegels, sondern auch auf die Schlackenschicht schliessen.

Ist die Kokillenwand so dick, dass ihre Temperaturverteilung während des Betriebes nicht durch eine einzige Angabe hinreichend genau beschrieben werden kann, so ist die Kokille im Modell in zwei oder mehr Schalen zu zerlegen. Für jede Schale ist dann eine zusätzliche Frequenz zu verwenden.

Statt oder neben den Spannungsamplituden können auch die Phasenverschiebungen, die ebenfalls von der Leitfähigkeitsverteilung im Inneren der Spulen abhängig sind, für die Messungen verwendet werden. Auf die Fourierzerlegung der Sekundärspannungen kann verzichtet werden, wenn die Form des Eingangssignals passend gewählt ist, d.h. im einfachsten Fall, wenn hintereinander verschiedene Frequenzen gewählt werden.

## Patentansprüche

1. Verfahren zum Überwachen einer Stranggiesskokille im Betrieb, insbesondere zum Messen des Füllstandes flüssigen Metalls, bei dem eine magnetische Felder erzeugende Primärspule sowie magnetische Felder messende Sekundärspulen die Stranggiesskokille koaxial umschliessen, wobei die Sekundärspulen zwischen der Primärspule und der Kokille angeordnet sind, dadurch gekennzeichnet, dass die zutiefst angeordnete Sekundärspule sich jederzeit unterhalb des Badspiegels befindet und als Referenzmessspule dient, dass wenigstens eine Sekundärspule im Bereich der möglichen Badspiegelschwankungen angebracht wird und als Messspule dient, dass die Primärspule mit Strömen beaufschlagt wird deren Fourieranalyse mehrere Frequenzen enthält, dass die Differenz von den in den Sekundärspulen induzierten Signale von den in der Referenzmessspule gemessenen Signale pro Fourierkomponente gebildet wird und mit Hilfe dieser Differenzwerte auf die Lage des Metallspiegels, auf die Schlackenschichtdicke, sowie auf die im jeweiligen Bereich der Kokillenwand herrschende Temperatur geschlossen wird.

2. Verfahren nach Anspruch 1, dadurch gekennzeichnet, dass aus der Amplitude oder der Phase der hochfrequenten Fourierkomponenten Schlüsse auf das Temperaturprofil der Kokillenwand und aus der Amplitude oder der Phase der niedrig frequenten Fourierkomponenten Schlüsse auf die Lage des Badspiegels gezogen werden.

3. Verfahren nach Anspruch 1, dadurch gekennzeichnet, dass die Differenzen der an den verschiedenen Sekundär- und der Referenzmessspule gemessenen Fourierkomponenten, auf die Intensitäten in der Primärspule bezogen und nach Betrag oder Phase analysiert werden.

4. Verfahren nach Anspruch 1, dadurch gekennzeichnet, dass das an die Primärspule angelegte Signal so gewählt wird, dass sich die gemessenen Signale ohne die Hilfe eines harmonischen Analysators deuten lassen.

5. Verfahren nach Anspruch 4, dadurch gekennzeichnet, dass das an die Primärspule angelegte Signal nur zwei harmonische Schwingungen enthält.

6. Verfahren nach einem der Ansprüche 1–4, dadurch gekennzeichnet, dass die Primärspule, statt mit Strömen deren Fourieranalyse mehrere Frequenzen enthält, zeitlich hintereinander mit einfach harmonischen Strömen verschiedener Frequenzen beaufschlagt wird.

## Claims

1. Process for monitoring a continuous casting mould during casting, especially for measuring the level of liquid metal, including a primary coil, generating magnetic fields and secondary coils, measuring magnetic fields, coaxially surrounding the mould, the secondary coils being located between the primary coil and the mould, characterized in that the secondary coil having the lowest position is always below the metal level and functions as reference, that at least one secondary coil is located in the region of the possible metal level fluctuations and functions as measuring coil, that signals whose Fourier analysis contains a plurality of frequencies are delivered to the primary coil, that the difference per Fourier component of the signals induced in the secondary coils and those in the reference coil is formed and that the level of the metal, the thickness of the slag layer and the temperature in portions of the mould wall is inferred from these values.

2. Process according to claim 1, characterized in that the temperature profile of the mould wall is determined from the amplitude or phase of high frequency Fourier components and that the level of liquid metal is determined from the amplitude and phase of low frequency Fourier components.

3. Process according to claim 1, characterized in that the differences of the Fourier components, measured by the different secondary coils and the reference coil are compared to signal intensities in the primary coil and analysed with regard to magnitude or phase.

4. Process according to claim 1, characterized in that the signal to the primary coil is chosen so that the measured signals can be used without harmonic analyser.

5. Process according to claim 4, characterized in that the signal to the primary coil contains only two harmonic oscillations.

6. Process according to one of the claims 1–4, characterized in that the primary coil, instead of being fed by currents whose Fourier analysis contains several frequencies, is fed in succession by harmonic currents with different frequencies.

## Revendications

1. Procédé pour contrôler une lingotière de coulée continue pendant la coulée, en particulier pour mesurer le niveau de métal liquide, dans lequel une bobine primaire créatrice de champs magnétique et des bobines secondaires mesurant des champs magnétiques entourent la lingotière de manière coaxiale et où les bobines secondaires sont disposées entre la bobine primaire et la lingotière, caractérisé en ce que la bobine secondaire disposée en bas, se trouve en permanence en-dessous du niveau du bain et sert de bobine de mesure de référence, en ce qu'au moins une des bobines secondaires est disposée dans la plage de variation possible du niveau du bain et sert de bobine de mesure, en ce que des courants dont l'analyse de Fourier montre plusieurs fréquences sont appliqués à la bobine primaire, en ce qu'on forme par composante de Fourier la différence des signaux induits dans les bobines secondaires de ceux induits dans la bobine de mesure de référence et en ce qu'on déduit à l'aide des différences des signaux le niveau de métal liquide, l'épaisseur de la couche de scorie ainsi que la température régnant dans les différentes régions de la paroi de la lingotière.

2. Procédé selon la revendication 1, caractérisé en ce qu'on déduit le profil de température dans la paroi de la lingotière de l'amplitude ou de la phase des composantes de Fourier à fréquence élevée et en ce qu'on déduit le niveau du bain de l'amplitude ou de la phase des composantes de Fourier à fréquence basse.

3. Procédé selon la revendication 1, caractérisé en ce que les différences des composantes de Fourier, mesurées aux différentes bobines secondaires et à la bobine de référence, sont rapportées aux intensités de courant parcourant la bobine primaire et sont analysées selon leur amplitude ou phase.

4. Procédé selon la revendication 1, caractérisé en ce qu'on choisit le signal appliqué à la bobine primaire de sorte à pouvoir interpréter les signaux mesurés sans l'aide d'un analyseur harmonique.

5. Procédé selon la revendication 4, caractérisé en ce que le signal appliqué à la bobine primaire ne comporte que deux harmoniques.

6. Procédé selon une des revendications 1–4, caractérisé en ce qu'on applique à la bobine primaire, au lieu de courants dont l'analyse de Fourier comporte plusieurs fréquences, successivement des courants harmoniques ayant des fréquences différentes.